Europäisches Patentamt

(19) European Patent Office

Office européen des brevets

(11) EP 1 276 199 A1

(12) **EUROPÄISCHE PATENTANMELDUNG**

(43) Veröffentlichungstag:
15.01.2003 Patentblatt 2003/03

(51) Int Cl.⁷: **H02G 5/02**, F16L 3/16

(21) Anmeldenummer: 02015175.9

(22) Anmeldetag: 08.07.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **11.07.2001 DE 10134759**

(71) Anmelder: **Ribe Elektroarmaturen GmbH**
**6850 Dornbirn (AT)**

(72) Erfinder:
• **Franz, Rinner**
**6712 Thüringen (AT)**

• **Tenschert, Bernhard**
**6824 Schlins (AT)**
• **Schuster, Günther**
**6800 Feldkirch (AT)**
• **Bily, Libor**
**6713 Ludesch (AT)**

(74) Vertreter: **Heyner, Klaus, Dr.-Ing.**
**Mittelweg 1h**
**01728 Bannewitz/Dresden (DE)**

(54) **Freiverstellbare Klemme für Rohrsammelschienen und dgl.**

(57) Die Erfindung betrifft den Aufbau von Klemmverbindern beim Anschluss von Rohrsammelschienen in Freiluftschaltanlagen, Umspannwerken und dgl.. Aufgabe der Erfindung ist es, einen Klemmverbinder vorzuschlagen, der bezüglich einer freizügigen Lage der Rohrsammelschiene im dreidimensionalen Raum und ihrer Heranführung an die Klemmstelle die Rohrsammelschienen in nahezu jeder praktisch relevanten Winkelstellung problemlos aufnehmen und bei guten Werten hinsichtlich thermischer und mechanischer Festigkeit der Klemme fixieren kann.

Nach der Konzeption der Erfindung besteht die freiverstellbare Klemme aus einer Grundplatte (1) mit mindestens einer über eine Drehachse A im Winkel α verstellbaren Gabelstütze (2), wobei die Drehachse A senkrecht zur Grundplatte (1) verläuft und als ein massiver, mit der Grundplatte (1) fest verbundener Bolzen (3) ausgeführt ist und die Gabelstütze (2) in ihrem Fußteil mit einer Klemmmanschette (2.1) ausgeführt ist, die den Bolzen (3) winkelverstellbar umfasst und oberhalb des Fußteils zwei Gabelarme (2.2) vorhanden sind, in deren Zwischenraum ein Führungsring (5) für die Aufnahme des Rohrsammelschienenendes angeordnet ist, der um eine parallel zur Grundplatte (1) durch die Enden der Gabelarme (2.2) verlaufende Drehachse B (4) mit dem Winkel β verstellbar ist. Im vom Gabelzwischenraum abgewandten Seitenbereich der Gabelarme (2.2) oder angreifend an der Grundplatte (1) ist jeweils mindestens ein Anschluss (2.3) zum Befestigen einer flexiblen Stromverbindung (6) vorgesehen, über die und den Klemmenanschluss (7) auf dem Endstück der in die Klemme bis zum Führungsring (5) eingeschobenen Rohrsammelschiene (10) eine stromtragfähige elektrische Verbindung zwischen der Rohrsammelschiene (10) und den Klemmenteilen (1, 2, 3) sowie über die Klemme zum Geräteanschluss erfolgt.

FIG. 2

EP 1 276 199 A1

**Beschreibung**

Die Erfindung betrifft eine freiverstellbare Klemme für Rohrsammelschienen in Freiluftschaltanlagen, Umspannwerken und dgl..
Rohrsammelschienen werden zur Energieübertragung in Hochspannungs-Schaltanlagen eingesetzt, wobei jede Rohrsammelschiene eine Phase bildet. Hierbei betragen die Spannungen i.d.R. 110 kV bis 500 KV.

Bei der Herstellung elektrischer Anschlüsse zu Elektrogeräten, beispielsweise im Umspannwerk, sind bei Nutzung von starren Verbindungsleitungen in Form von Rohrsammelschienen an den Anschlussstellen die verschiedensten Anschlusswinkel zu realisieren.

Die bekannten verstellbaren Klemmverbinder gestatten nur eine eingeschränkte Winkelverstellung und weisen darüber hinaus unbefriedigende Werte hinsichtlich Strom- und Temperaturbelastung sowie mechanischer Belastbarkeit der Klemmen auf.
Sie bestehen z.B. aus einer Grundplatte, mit der der Geräteanschluß erfolgt, und einem auf dieser Grundplatte winkelverstellbar verschraubten Führungsring, der einmal das Endstück der Rohrsammelschiene aufnimmt und zum anderen eine Seilverbindung zur Stromeinleitung von der Rohrsammelschiene in den Klemmverbinder aufweist.

Die Winkelverstellung kann hier nur jeweils um eine Drehachse, d.h. in einer Ebene erfolgen. Diese Drehachse steht senkrecht auf der Grund- bzw. Montageplatte des Klemmverbinders. Die Stromleitung von der Rohrsammelschiene zum anzuschließenden Elektrogerät erfolgt dabei oft nur punktuell über einen oder mehrere Flachanschlüsse mit einer oder mehreren in Richtung der Drehachse verlaufenden Schraubverbindungen.

Kurzschlussströme in Schaltanlagen gefährden die hier arbeitenden Geräte und die zugehörigen Stützisolatoren, Gerüste und Portale. Ausgehend von den möglichen Kurzschlussstrombelastungen werden für die Montage von Rohrsammelschienen Klemmverbinder benötigt, die so aufgebaut sind, dass sie höchsten Ansprüchen an die mechanische und thermische Festigkeit genügen und vorzugsweise keine Biegebelastungen an die Anschlusspunkte im Falle eines Kurzschlussstromes weiterleiten.

Davon ausgehend ist es Aufgabe der Erfindung eine freiverstellbare Klemme für Rohrsammelschienen vorzuschlagen, die bezüglich einer freizügigen Lage der Rohrsammelschiene im dreidimensionalen Raum und ihrer Heranführung an die Klemmstelle die Rohrsammelschienen in nahezu jeder praktisch relevanten Winkelstellung problemlos aufnehmen und bei guten Werten hinsichtlich thermischer und mechanischer Festigkeit der Klemme fixieren kann.

Die erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung besteht die neue freiverstellbare Klemme aus einer Grundplatte mit mindestens einer über eine senkrecht zur Grundplatte verlaufenden Drehachse A winkelverstellbaren Gabelstütze. Dabei ist die Drehachse A als massiver Bolzen ausgeführt, der mit der Grundplatte fest verbunden ist. Die Gabelstütze ist in ihrem Fußteil als Klemmmanschette ausgeführt, wobei die Klemmmanschette den Bolzen zur Gewährleistung eines guten Stromübergangs möglichst vollflächig umfasst. Die Gabelstütze kann über die Klemmverbindung der Klemmmanschette durch Drehbewegung auf dem Bolzen in die gewünschte Winkelposition $\alpha$ gebracht und dann durch Anziehen der Schrauben der Klemmverbindung arretiert werden.

Oberhalb des Fußbereichs besitzt die Gabelstütze zwei Gabelarme, zwischen denen über eine parallel zur Grundplatte verlaufende Drehachse B der das Endstück der anzuschließenden Rohrsammelschiene aufnehmende Führungsring winkelverstellbar (Winkel $\beta$) angeordnet ist.
Im Seitenbereich der Gabelarme befinden sich auf der vom Gabelzwischenraum abgewandten Seite jeweils mindestens eine Aufnahme oder ein Anschluss für mindestens eine flexible Stromverbindung zur Herstellung eines stromtragfähigen Klemmenanschlusses an die Rohrsammelschiene. Die Stromleitung von der Rohrsammelschiene zum Geräteanschluss läuft demnach über den Klemmenanschluss auf dem Endstück der Rohrsammelschiene, die flexible Stromverbindung zwischen diesem Klemmenanschluss und den Gabelarmen, weiter Gabelstütze, Bolzen, Grundplatte. In einer modifizierten Ausführungsform können die flexiblen Stromverbindungen direkt an der Grundplatte angeschlossen sein.

Über die beiden Drehachsen A und B kann im dreidimensionalen Raum die in die neue Klemme eingelegte und dabei bis in den Führungsring hineinragende Rohrsammelschiene nahezu in jeder Position angeschlossen und mittels Klemmmanschette der Gabelstütze sowie Klemmenanschluss auf der Rohrsammelschiene arretiert werden.
Die bevorzugte Winkelverstellbarkeit soll dabei betragen:

- Achse A zur Gewährleistung einer horizontalen Verstellbarkeit:

$$\alpha = \pm\ 90°$$

- Achse B zur Gewährleistung der vertikalen Verstellbarkeit:

$$\beta = \pm 45°.$$

Durch den Ringspalt, der zwischen dem Außendurchmesser der in den Führungsring eintauchenden Rohrsammelschiene und dem Innenradius des Führungsrings gebildet wird, besteht in kinematischer Hinsicht ein möglicher Bewegungsspielraum, auch noch nach der Fixierung der Gabelstütze.

Dieser Bewegungsspielraum wird durch die in vertikaler Anordnung einander auf einer gedachten Achse gegenüber liegenden beiden Fixierstifte des Führungsrings bestimmt, die - falls eine Fixierung des Rohrendes der Rohrsammelschiene gewollt ist - in die Rohrsammelschiene eingreifen. Durch die damit gebildete Drehachse C ist auch nach Feststellung der Klemmpaarung - Klemmmanschette der Gabelstütze auf dem Bolzen der Grundplatte - und damit Feststellung der Drehachse A eine wünschenswerte zusätzliche Beweglichkeit der Rohrsammelschiene um die Achse A bzw. C gegeben. Die auf diese Weise erreichbare Winkelverstellbarkeit beträgt etwa $\gamma = \pm 15°$.

Zur Gewährleistung einer der Wärmeausdehnung der Rohrsammelschiene adäquaten Dilatationsbewegung kann die vorgenannte Fixierung der Rohrsammelschiene nur einseitig erfolgen. Falls die Fixierstifte nicht zum Einsatz, d.h. Eingriff in die Rohrsammelschiene kommen, gleitet das Rohr der Rohrsammelschiene direkt oder über eine Kunststoffzwischenlage auf dem Führungsring, der gewöhnlich aus Aluminium besteht.

Die Beweglichkeit der Rohrsammelschiene insbesondere in ihrer Längsrichtung kann alternativ auch dadurch verbessert werden, dass die in den Enden der Gabelarme befindlichen Lagerpunkte für den Führungsring (Drehachse B) in horizontaler Richtung in linearer Erstreckung zu Nuten aufgeweitet werden, die parallel zur Grundplatte verlaufen. Die Lagerung des Führungsrings in diesen Nuten erfolgt dabei vorzugsweise auf Kunststoffrollen.

Hauptvorteil der erfindungsgemäßen Klemme ist die freizügige Winkeleinstellung der Klemme und damit der anzuschließenden Rohrsammelschiene bei der Montage in Verbindung mit der mechanischen Entkopplung der Rohrsammelschiene von der Aufhängung in der Klemme.

Weitere wesentliche Vorteile der neuen freiverstellbaren Klemme sind:

- Der robuste mechanische Aufbau und die sichere Beherrschung aller Stromkontaktstellen bei geringem Übergangswiderstand bewirken eine Erhöhung der Kurzschlussstrombelastbarkeit und der mechanischen Belastbarkeit
- Es werden alle Biegemomente und ihre Einleitung in die Klemme und die anzuschießenden Geräte vermieden, die durch oszillierende Bewegungen, Bewegungen durch Kurzschlusskräfte und Dilatationsbewegung der Rohrsammelschiene entstehen können.
- An den für den Stromübergang von der Rohrsammelschiene zur Grundplatte wesentlichen Klemmstellen werden ausschließlich Mehrschrauben-Kontaktanordnungen eingesetzt. Das betrifft den Klemmenanschluss auf dem Endstück der Rohrsammelschiene und die Montage des Fußteils der Gabelstütze mittels Klemmmanschette auf dem an der Grundplatte befestigen Bolzen.
Dadurch gibt es keinerlei kritische Engstellen in der Stromführung durch die in die Stromführung einbezogenen Bauteile der Klemme.
- Der symmetrische Aufbau der Klemme mit den an beiden Gabelarmen angreifenden flexiblen Stromverbindungen zum Klemmenanschluss auf dem Endstück der Rohrsammelschiene hat auch eine symmetrische Stromverteilung und eine symmetrische Verteilung mechanischer Kräfte zur Folge.

Weitere Einzelheiten, Merkmale und Vorteile der Erfindung ergeben sich aus der nachfolgenden Beschreibung eines Ausführungsbeispiels unter Bezugnahme auf die zugehörige Zeichnung. Es zeigen

Fig. 1 den Grundaufbau der freiverstellbaren Klemme,

Fig. 2 eine freiverstellbare Klemme mit angeschlossener Rohrsammelschiene und

Fig. 3 die Ausführung einer Doppelanordnung der erfindungsgemäßen Klemme auf einer gemeinsamen Grundplatte.

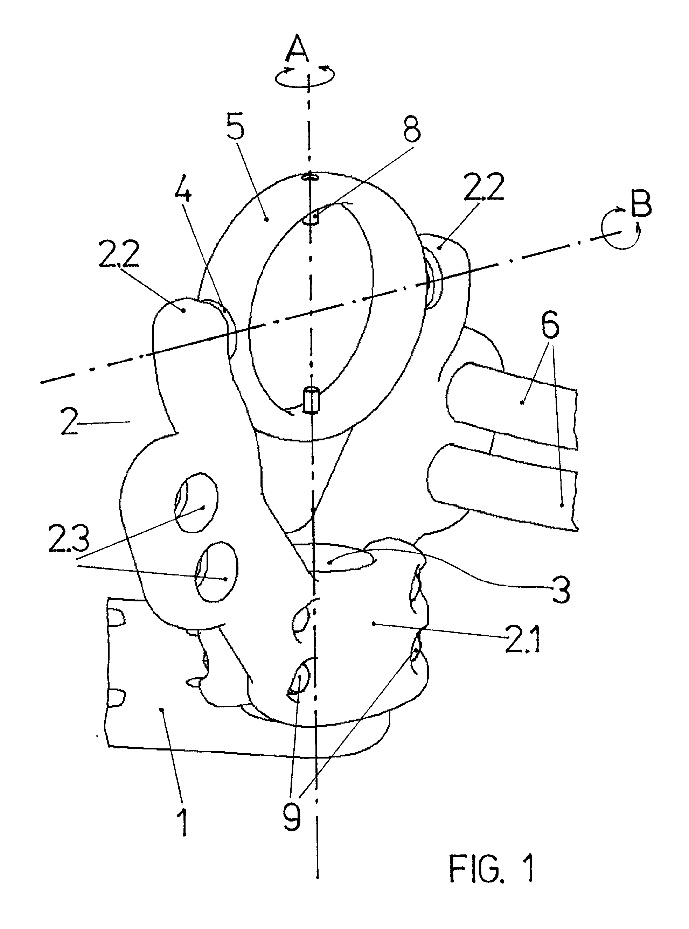

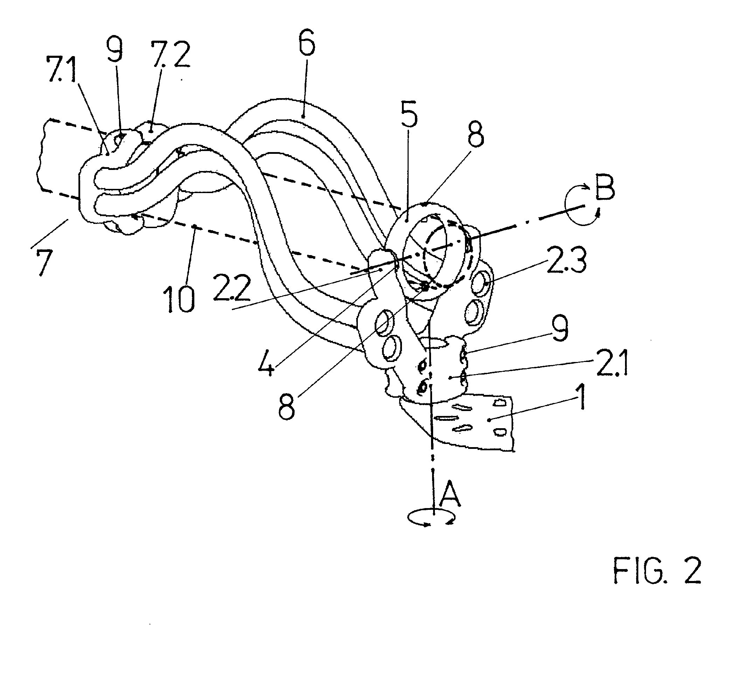

Fig. 1 veranschaulicht den Grundaufbau der neu entwickelten frei verstellbaren Klemme mit den für die mechanischen Eigenschaften und die Stromführung durch die Klemme wesentlichen Bauteilen Grundplatte 1 mit Bolzen 3, auf dem Bolzen 3 winkelverstellbar aufsitzender Gabelstütze 2 mit den beiden Gabelarmen 2.2 und den an den Gabelarmen 2.2 angreifenden flexiblen Stromverbindungen 6 zum Klemmenanschluss 7 auf dem Endstück der Rohrsamme-schiene 10, s. auch Fig. 2.

Die auf dem Bolzen 3 aufsitzende Gabelstütze 2 kann eine Verstellbewegung um die Drehachse A im Winkelbereich $\alpha = \pm 90°$ ausführen.
Nach Einstellung des gewünschten Winkels $\alpha$ wird die Gabelstütze 2 durch Anziehen der Schrauben 9 in ihrem als Klemmmanschette 2.1 ausgeführten Fußteil arretiert.

Bei einer alternativen Ausführung der neuen Klemme, bei der das anzuschließende Gerät keine Anschlussfläche sondern einen Anschlussbolzen besitzt, kann auf die Grundplatte verzichtet werden. In diesem Fall wird dann der Anschlussbolzen direkt in die Klemmmanschette der Gabelstütze eingeführt. Dabei wird der Innendurchmesser der Klemmmanschette dem Bolzendurchmesser angepasst.

Der Anschluß der flexiblen Stromverbindungen 6 an die Gabelarme 2.2 erfolgt bei diesem Ausführungsbeispiel über Aufnahmen 2.3, die in den nach außen weisenden Seitenbereich der Gabelarme 2.2 eingebracht sind.

Zwischen den Gabelarmen 2.2 und winkelverstellbar um die Drehachse B ist ein Führungsring 5 angeordnet. In diesen Führungsring 5 greift das Ende der an die freiverstellbare Klemme angeschlossenen Rohrsammelschiene 10 ein, s. Fig. 2. Der Führungsring 5 ist in der Drehachse B über Drehanschlüsse 4 aufgehängt. Die Verstellbewegung des Führungsrings 5 und damit der in den Führungsring eingeschobenen Rohrsammelschienen 10 soll vorzugsweise im Winkelbereich β = ±45° erfolgen

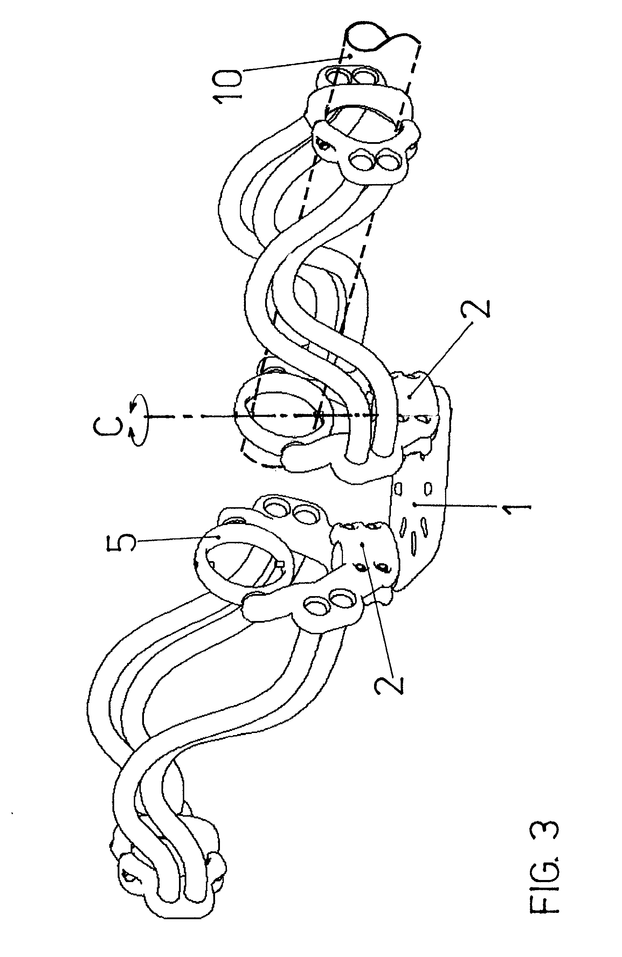

Die Fixierung der Rohrsammelschiene 10 im Führungsring 5 erfolgt mittels der beiden Fixierstifte 8, s. Fig. 2 und 3. Diese in die Rohrsammelschiene 10 eingreifenden Fixierstifte 8 gewährleisten in Wechselwirkung mit dem Ringspalt zwischen Rohrsammelschiene 10 und Führungsring 5 eine begrenzte Winkelverstellbarkeit um die Achse C, s. Fig. 3.
Die Fixierstifte entfallen dann, wenn das Rohr der Rohrsammelschiene 10 zum Ausgleich der Wärmeausdehnung eine gleitende Dilatationsbewegung durch den Führungsring 5, ggf. aufliegend auf einer Kunststoffzwischenlage, ausführen soll.

Fig. 2 zeigt zusätzlich den Verlauf der vollständigen und dabei symmetrisch angeordneten flexiblen Stromverbindung 6 von den Gabelarmen 2.2 bis zum Klemmenanschluss 7 auf den Endstück der Rohrsammelschiene 10. Der Klemmenanschluss 7 besteht aus einem linken und einem rechten Klemmteil 7.1, 7.2 mit Schraubverbindung 9.

Fig. 3 zeigt eine Doppelanordnung der beschriebenen frei verstellbaren Klemme, bei der auf einer gemeinsamen Grundplatte 1 zwei Gabelstützen 2 montiert sind.

## LISTE DER BEZUGSZEICHEN

1    Grundplatte
2    Gabelstütze
     2.1 Klemmmanschette
     2.2 Gabelarme
     2.3 Aufnahme für Seilanschluß
3    Bolzen, (Drehachse A)
4    Drehanschlüsse für 5, (Drehachse B)
5    Führungsring
6    flexible Stromverbindung zur Rohrsammelschiene
7    Klemmenanschluß auf Endstück der Rohrsammelschienen
     7.1 Klemmteilhälfte
     7.2 Klemmteilhälfte
8    Fixierstifte
9    Schrauben
10   Rohrsammelschiene

## Patentansprüche

1.  Freiverstellbare Klemme für Rohrsammelschienen und dgl. bestehend aus

    - einer Grundplatte (1) mit mindestens einer über eine Drehachse A im Winkel α verstellbaren Gabelstütze (2), wobei die Drehachse A senkrecht zur Grundplatte (1) verläuft und als ein massiver, mit der Grundplatte (1) fest verbundener Bolzen (3) ausgeführt ist und
    - die Gabelstütze (2) in ihrem Fußteil mit einer Klemmmanschette (2.1) ausgeführt ist, die den Bolzen (3) winkelverstellbar umfasst und oberhalb des Fußteils zwei Gabelarme (2.2) vorhanden sind, in deren Zwischenraum ein Führungsring (5) für die Aufnahme des Rohrsammelschienenendes angeordnet ist, der um eine parallel zur Grundplatte (1) durch die Enden der Gabelarme (2.2) verlaufende Drehachse B (4) mit dem Winkel β verstellbar ist und
    - im vom Gabelzwischenraum abgewandten Seitenbereich der Gabelarme (2.2) oder angreifend an der Grundplatte (1) jeweils mindestens eine Aufnahme (2.3) oder mindestens ein Anschluss zum Befestigen einer flexiblen Stromverbindungen (6) vorgesehen ist, über die und den Klemmenanschluss (7) auf dem Endstück der in die Klemme bis zum Führungsring (5) eingeschobenen Rohrsammelschiene (10) eine stromtragfähige elektrische Verbindung zwischen der Rohrsammelschienen (10) und den Klemmenteilen (1, 2, 3) sowie über die Klemme zum Geräteanschluss erfolgt.

2.  Freiverstellbare Klemme nach Anspruch 1, **dadurch gekennzeichnet, dass** die Winkelverstellbarkeit um die Drehachse A (3) zur Gewährleistung einer ausreichenden horizontalen Verstellbarkeit α = ±90° betragen soll.

3.  Freiverstellbare Klemme nach Anspruch 1 oder 2, **dadurch gekennzeichnet, dass** die Winkelverstellbarkeit um die Drehachse B (4) zur Gewährleistung einer ausreichenden vertikalen Verstellbarkeit β = ±45° betragen soll.

4.  Freiverstellbare Klemme nach Anspruch 1, **dadurch gekennzeichnet, dass** - falls eine Fixierung des Rohrendes der Rohrsammelschiene (10) gewollt ist - das Ende der Rohrsammelschiene (10) im Führungsring (5) durch zwei Fixierstifte (8) gehalten ist, die auf einer durch den Mittelpunkt des Führungsrings (5) laufenden, gedachten Achse in vertikaler Anordnung einander gegenüber liegend im Führungsring verankert sind und in die Rohrsammelschiene (10) eingreifen, so dass eine parallel zur Drehachse A verlaufende Drehachse C gebildet wird.

**5.** Freiverstellbare Klemme nach Anspruch 4, **dadurch gekennzeichnet, dass** die Winkelverstellbarkeit der Rohrsammelschiene (10) um die Drehachse C bei einem Ringspalt zwischen Rohrsammelschiene (10) und Führungsring (5) von etwa 5 mm etwa $\chi = \pm 15°$ beträgt.

**6.** Freiverstellbare Klemme nach einem der Ansprüche 1 bis 5, **dadurch gekennzeichnet, dass** die in den Enden der Gabelarme (2.2) befindlichen Lagerstellen (4) für die Winkelverstellbarkeit des Führungsrings (5) in der Drehachse B in horizontaler Richtung, senkrecht zur axialen Verlängerung des Bolzens (3), zu Nuten aufgeweitet sind und in diesen Nuten die Drehanschlüsse (4) des Führungsrings (5) mit der in den Führungsring eingelegten Rohrsammelschiene (10) gleiten.

**7.** Freiverstellbare Klemme nach Anspruch 6, **dadurch gekennzeichnet, dass** die Drehanschlüsse (4) als Kunststoffrollen ausgeführt sind.

**8.** Freiverstellbare Klemme nach einem der Ansprüche 1 bis 7, **dadurch gekennzeichnet, dass** die Klemme mit den stromleitenden Teilen der Gabelstütze (2), mit den beiden Gabelarmen (2.2), und den an den Gabelarmen angreifenden flexiblen Stromverbindungen (6) zum Klemmenanschluss (7) auf dem Endstück der Rohrsammelschiene (10) einen symmetrischen Aufbau aufweist.

**9.** Freiverstellbare Klemme nach Anspruch 8, **dadurch gekennzeichnet, dass** der Klemmenanschluss (7) auf dem Endstück der Rohrsammelschiene (10) aus einer ersten und einer zweiten Klemmteilhälfte (7.1, 7.2) besteht und von diesen Klemmteilhälften die flexiblen Stromverbindungen (6) in symmetrischer Anordnung zum ersten und zweiten Gabelarm (2.2) und/oder zur Grundplatte (1) verlaufen.

**10.** Freiverstellbare Klemme nach einem der Ansprüche 1 bis 9, **dadurch gekennzeichnet, dass** an den für den Stromübergang genutzten Klemmstellen, von der Klemmmanschette (2.1) auf den Bolzen (3) und dem Klemmenanschluss (7) auf die Rohrsammelschiene (10) Anordnungen unter Nutzung mehrerer Schrauben (9) vorgesehen sind.

**11.** Freiverstellbare Klemme nach einem der Ansprüche 1 bis 10, **dadurch gekennzeichnet, dass** mehrere Gabelstützen (2) auf einer gemeinsamen Grundplatte (1)

angeordnet sind.

FIG. 1

FIG. 2

EP 1 276 199 A1

FIG. 3

EP 1 276 199 A1

| | Europäisches Patentamt | **EUROPÄISCHER RECHERCHENBERICHT** | Nummer der Anmeldung EP 02 01 5175 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | FR 1 547 048 A (BURNDY CORP) 22. November 1968 (1968-11-22) * das ganze Dokument * --- | 1-11 | H02G5/02 F16L3/16 |
| A | CH 607 393 A (PFISTERER ELEKTROTECH KARL) 15. Dezember 1978 (1978-12-15) --- | | |
| A | US 3 633 858 A (BAIRD ROBERT GORDON ET AL) 11. Januar 1972 (1972-01-11) ---- | | |

| RECHERCHIERTE SACHGEBIETE (Int.Cl.7) |
|---|
| H02G F16L |

Der vorliegende Recherchenbericht wurde für alle Patentansprüche erstellt

| Recherchenort | Abschlußdatum der Recherche | Prüfer |
|---|---|---|
| MÜNCHEN | 30. Oktober 2002 | Comel, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.** EP 02 01 5175

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2002

| Im Recherchenbericht angeführtes Patentdokument | Datum der Veröffentlichung | Mitglied(er) der Patentfamilie | Datum der Veröffentlichung |
|---|---|---|---|
| FR 1547048 A | 22-11-1968 | KEINE | |
| CH 607393 A | 15-12-1978 | DE 7608865 U1 | 15-07-1976 |
| | | AT 361066 B | 25-02-1981 |
| | | AT 168977 A | 15-07-1980 |
| | | CH 607393 A5 | 15-12-1978 |
| US 3633858 A | 11-01-1972 | KEINE | |

Für nähere Einzelheiten zu diesem Anhang : siehe Amtsblatt des Europäischen Patentamts, Nr.12/82